# EUROPEAN PATENT SPECIFICATION

(11) **EP 2 147 529 B1**
(45) Date of publication and mention of the grant of the patent: **14.10.2015**
(21) Application number: 08735805.7
(22) Date of filing: 03.04.2008
(51) Int. Cl.: H04L 12/801, H04L 12/24, H04L 12/28

(54) **METHOD AND DEVICE FOR ADJUSTING A TRANSMISSION MODE AND SYSTEM COMPRISING SUCH DEVICE**
VERFAHREN UND EINRICHTUNG ZUM EINSTELLEN EINES ÜBERTRAGUNGSMODUS UND EINE SOLCHE EINRICHTUNG UMFASSENDES SYSTEM
PROCÉDÉ ET DISPOSITIF POUR AJUSTER UN MODE DE TRANSMISSION ET SYSTÈME COMPRENANT CE DISPOSITIF

(30) Priority: 11.04.2007 EP 07007442
(43) Date of publication of application: 27.01.2010
(73) Proprietor: Nokia Solutions and Networks Oy, 02610 Espoo (FI)
(72) Inventor: AHRNDT, Thomas, 85521 Ottobrunn (DE); SCHNITTER, Matthias, 80689 München (DE); SCHWEYER, Bernhard, 82433 Bad Kohlgrub (DE)
(74) Representative: Borgström, Markus
(86) International application number: PCT/EP2008/054064
(87) International publication number: WO 2008/125519

(56) References cited:
- EP-A- 1 239 635
- WO-A-2005/094029
- US-B1- 6 424 636
- US-B1- 7 187 681

## Description

The invention relates to a method and a device for adjusting a transmission mode and to a system comprising such device.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52Mbit/s in downstream - 12Mbit/s in upstream with asymmetric access.

Currently, standard VDSL uses up to 4 different frequency bands, two for upstream (from the client to the telecom provider) and two for downstream. Suitable modulation techniques are QAM (quadrature amplitude modulation) or DMT (discrete multitone modulation).

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices, from fiber-fed cabinets preferably located near the customer premises, or within buildings.

VDSL2 is designed to support the wide deployment of Triple Play services such as voice, video, data, high definition television (HDTV) and interactive gaming. VDSL2 enables operators and carriers to gradually, flexibly, and cost efficiently upgrade existing xDSL infrastructure.

ITU-T G.993.2 (VDSL2) is an enhancement to G.993.1 (VDSL) that permits the transmission of asymmetric and symmetric (full duplex) aggregate data rates up to 200Mbit/s on twisted pairs using a bandwidth up to 30MHz.

Standards for digital subscriber line transmission such as ADSL, HDSL, VDSL, ADSL2/ADSL2+ or VDSL2 predominantly follow a traditional "leased line philosophy" according to which after an initial synchronization procedure a high bit rate connection is running 24 hours a day independent whether there is payload demand by the user or not.

A packet data of an all-IP service, e.g., WWW access, VoIP, IPTV, FTP, or the like, is encapsulated into a constant bit rate service. A mechanism for rate adaptation in ADSL2 is slow and based on complicated negotiations between both sides.

In ADSL2/2+, adaptation of transmission power is achieved by a so-called "L2 mode" that allows to reduce the power for transmission when the required payload data rate falls below a predetermined threshold.

Furthermore, such L2 mode runs a protocol between an ATU-C, i.e. an ADSL modem in the central office (CO), and an ATU-R,
i.e. a remote modem within the premises of the subscriber. Both, ATU-C and ATU-R need to negotiate terms, in particular a start and an end, of an L2 mode session.

In order to efficiently reduce power consumption, the L2 mode is only capable of transmitting data at a significantly reduced bandwidth in comparison to the bandwidth available in a high speed mode (LO mode). In case clients request an increased bandwidth, a transition has to be performed from L2 mode to L0 mode. This transition needs a certain amount of time, during which user data has to be buffered as new data arrive faster than they can be forwarded via a (still active) L2 mode.

Hence, increased data rates (e.g., using VDSL2) require bigger buffer space for temporarily storing data until the highspeed connection (LO mode) is up and running (again).

There are two disadvantages apparent: First, buffer with large memory is needed and second, there is significant delay until the client receives the data requested.

The object to be solved is to overcome the disadvantages as stated supra and to provide an approach to efficiently transmit data with significantly reduced delay and less (or no) buffer space needed.

This problem is solved according to the features of the independent claims. Further embodiments result from the depending claims.

The Prior Art document EP1239635 discloses a method for accessing from a video server some files being able to be downloaded at high speed by indicating to the Broadband Access Server to place said full rate data in a full rate queue.

In order to overcome this problem a method for adjusting a transmission mode is provided as defined in the claims.

This approach bears the advantage that based on the information within the upstream data traffic the first transmission mode is activated. Such information can be or comprise a keyword, a command, a predefined string, a message of a particular protocol, or combinations or extracts thereof or the like.

In an embodiment, the first transmission mode is a high traffic mode, e.g., a mode of high bandwidth.

In particular, such high traffic mode can be an L0 mode.

It is an embodiment that the predetermined first information comprises at least one message that results in or leads to a high downstream traffic.

It is to be noted that upstream traffic is preferably directed from a client, e.g., a subscriber of a streaming service like IPTV to a Central Office (CO) or a streaming server, whereas downstream traffic is directed from the streaming server and/or Central Office towards the client.

It is another embodiment that the first information comprises at least one of the following messages:
- an HTTP request;
- an IGMP request.

Such requests or messages sent in the upstream direction may indicate that the client expects to receive a great volume of data (directed downstream).

It is also an embodiment that the upstream data is analyzed and that a second transmission mode is enabled if the upstream data traffic comprises a predetermined second information.

In yet another embodiment, the second transmission is a low traffic mode. In particular, the second transmission mode can be an energy-saving mode.

In a further embodiment, the second transmission mode is an L2 mode.

Hence, based on the second information conveyed in upstream direction, the energy-saving mode, e.g., L2 mode, may be activated. Such second information can be or comprise any kind of a single datum, a keyword, a command, a predefined string, a message of a particular protocol or the like.

In a next embodiment, the upstream traffic can be analyzed and, if no first information is conveyed upstream for a predetermined period of time, the second transmission mode may be activated. This may be the case if a subscriber received the streaming data and did not request additional data that needs to be transmitted in the high traffic mode. A timer may be set in such case and after such timer expires (time-out), the low traffic mode (e.g., L2 mode) could be re-activated.

In addition, combination of time-outs and information may be used in order to switch to the low traffic mode (again). The same applies with regard to switching from the low traffic mode to the high traffic mode.

In an embodiment the (predetermined) first information and/or the (predetermined) second information are stored in a look-up table.

This allows an efficient comparison between information conveyed via upstream traffic and predefined keywords, messages or the like that may be used to enable the first transmission mode and/or the second transmission mode.

It is also an embodiment that the upstream traffic is analyzed by checking whether the predetermined first information and/or the predetermined second information can be found within the look-up table.

The problem stated supra is also solved by a device for adjusting a transmission mode comprising a processor unit that is equipped and/or arranged such that the method as described herein can be run on said processor.

As an embodiment, the device is a communication device, in particular a network element.

It is further an embodiment that the device is of the following type:
- a server;
- a device associated with a central office or a cabinet;
- a switch;
- a router;
- a DSLAM (digital subscriber line access multiplexer);
- a gateway.

Furthermore, the problem stated before can be solved by a communication system comprising a device as described herein.

Embodiments of the invention are shown and illustrated in the following figures:
- Fig.1: shows a diagram of a scenario for providing data streaming from a server to a client;
- Fig.2: shows a state machine comprising a First Transmission Mode and a Second Transmission Mode;
- Fig.3: shows a constellation diagram.

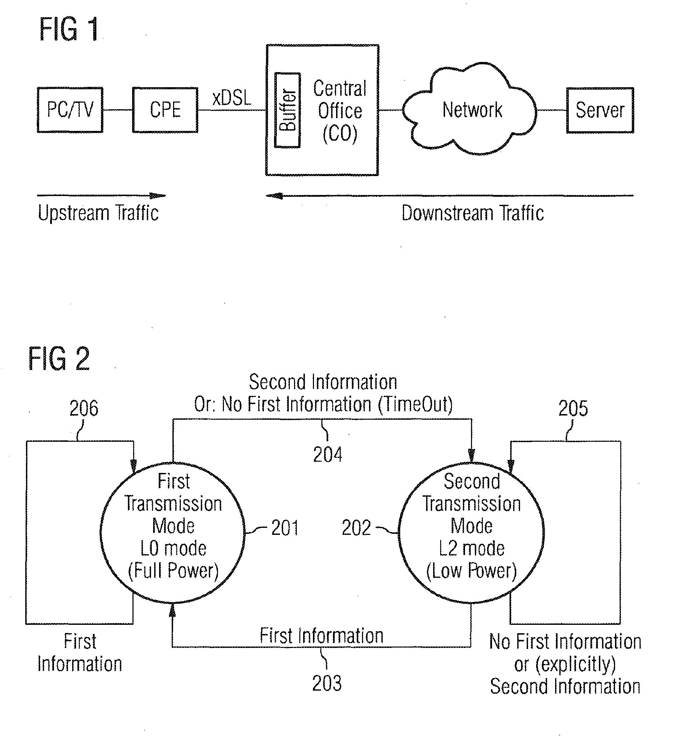

**Fig.1** shows a diagram comprising participants of a scenario for providing data streaming (e.g., video and/or audio and/or data) from a Server to a PC or TV, in particular a set top box, acting as a client.

The PC/TV is connected to a customer premises equipment CPE (also referred to as customer-provided equipment). The customer premises equipment CPE is any terminal located at a subscriber's premises that is connected to a carrier's communication channel.

A Central Office may be a cabinet comprising at least one device, in particular a DSLAM, a switch, a router, a server or a gateway.

The customer premises equipment CPE is further connected to a Central Office CO via an xDSL connection. The Central Office CO usually is a physical building used to house inside plant equipment including telephone switches. The xDSL connection may be a connection of, e.g., the following type: ADSL, HDSL, VDSL, ADSL2/ADSL2+ or VDSL2 or any subsequent technology.

The Central Office CO comprises a Buffer that is used for storing information to be forwarded to the client PC/TV.

The Central Office CO is further connected via a Network to the Server, e.g. a streaming server used for IPTV, HDTV. The Server may be used for running an Internet Group Management Protocol (IGMP).

An Upstream Traffic is depicted as data sent towards the Server, whereas a Downstream Traffic refers to data sent towards the PC/TV (client).

The xDSL connection may comprise two different states as shown in **Fig.2****:**
- A First Transmission Mode 201 that corresponds to an L0 mode in ADSL2, which allows data to be transmitted with a high data rate;
- A Second Transmission Mode 202 that corresponds to an L2 mode in ADSL2, which allows data to be transmitted at a reduced (low) data rate. The Second Transmission Mode 202 works in particular as an energy-saving mode.

Fig.2 also shows several transitions 203 to 206. In principle, the Upstream Traffic can be analyzed in order to timely switch from one state to another. Thereby, information conveyed in upstream direction may comprise hints as how to switch between states or (alternatively) stay with the same state. A timely switching from the L2 mode to the L0 mode bears the advantage that the xDSL connection may already be in the First Transmission Mode 201 (full power mode) when streaming data arrives from the Server at the Central Office CO. Then, this streaming data does not have to be temporarily stored in the Buffer, but can be forwarded to the PC/TV without delay.

The following transitions are shown in Fig.2:
i) If the xDSL connection is in the Second Transmission Mode 202, a First Information of the upstream data traffic indicates that a transition 203 should be conducted and the xDSL changes to the First Transmission Mode 201. Hence, the First Information is used to timely switch to a high traffic mode.
ii) It is also possible that the xDSL connection stays in the Second Transmission Mode 202, because no such First Information is recognized in the Upstream Traffic (e.g., for a predetermined period of time). Further, explicit Second Information in the Upstream Traffic may indicate that the Second Transmission Mode 202 should be maintained. These examples reflect transition 205.
iii) If the xDSL connection is in the First Transmission Mode 201 running at, e.g., full speed, the Second Information obtained in the Upstream Traffic may indicate that a transition 204 to the Second Transmission Mode 202 should take place and the low traffic mode should be activated. Alternatively, obtaining no First Information for a predetermined period of time (time-out functionality) may also be an indication for a transition 204 to this energy-saving mode 202.
iv) Another transition 206 indicates that the First Transmission Mode 201 is maintained. This is preferably done if further First Information is found (e.g., within a predetermined time interval) in the Upstream Traffic indicating the PC/TV requires additional streaming information.

The state machine shown in Fig.2 can be part of the customer premises equipment CPE and/or of xDSL equipment located in the Central Office CO (e.g., a DSLAM). The state machine could also be distributed among those entities.

The First Information may be any indication sent upstream that shows that the PC/TV (client) expects to receive data (audio, video and/or user data) with high data rate. Hence, the xDSL connection has to change to its full power mode (the First Transmission Mode 201). Such First Information can comprise any HTTP-request and/or any IGMP-request sent towards the Server.

Further, the Second Information sent upstream indicates that the PC/TV (client) does not (or no longer) expect to receive data with high data rate. This could be indicated by sending some sort of end-transmission message towards the Server. In such case, the Second Transmission Mode can be activated to ensure a low power mode.

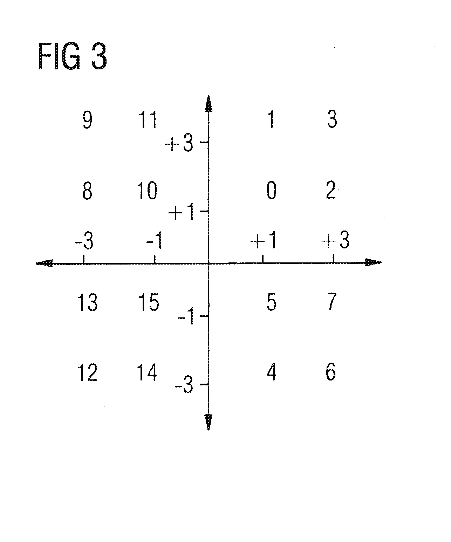

**Fig.3** shows a constellation diagram of a 16QAM system. Each constellation, i.e. point in the x-y-plane represents a predefined bit pattern, referred to as a symbol. In Fig.3, constellations for symbols 0, 5, 10 and 15 show a smaller amplitude than the remaining constellations and hence lead to a reduced transmission power.

This is an example of how a low power mode (Second Transmission Mode 202, L2 mode) can be realized: The xDSL connection may then, although the full QAM stage is still in use, apply only a reduced QAM stage, thereby significantly reducing the maximum amplitude (i.e. energy) required for transmitting a symbol.

## Claims

1. A method for adjusting a transmission mode of an xDSL connection via which a digital subscriber line access multiplexer, DSLAM, and a customer premises equipment are connected comprising the steps:
- in the DSLAM, analyzing an upstream data traffic; and
- in the DSLAM, enabling an xDSL L0 mode if the upstream data traffic comprises a predetermined first information that indicates that downstream data with high data rate is expected.

2. The method according to claim 1, further comprising the step:
- in the DSLAM, enabling an xDSL L2 mode if the upstream data traffic comprises a predetermined second information that indicates that no downstream data with high data rate is expected and/or if there was no first information for a predetermined period of time.

3. The method according to claim 1 or 2, wherein the first information comprises at least one of the following messages:
- an HTTP request;
- an IGMP request.

4. The method according to any of the preceding claims,
wherein the predetermined first information and/or the predetermined second information is stored in a look-up table.

5. The method according to claim 4, wherein the upstream traffic is analyzed by checking whether the predetermined first information and/or the predetermined second information can be found in the look-up table.

6. A digital subscriber line access multiplexer connectable to a customer premises equipment via an xDSL connection, comprising:
- means for analyzing an upstream data traffic;
- means for enabling an xDSL L0 mode if the upstream data traffic comprises a predetermined first information that indicates that downstream data with high data rate is expected.

7. A digital subscriber line access multiplexer according to claim 6, further comprising:
- means for enabling an xDSL L2 mode if the upstream data traffic comprises a predetermined second information that indicates that no downstream data with high data rate is expected and/or if there was no first information for a predetermined period of time.

8. A communication system comprising the digital subscriber line access multiplexer according to claim 6 and/or claim 7.

## Patentansprüche

1. Verfahren zum Einstellen eines Sendemodus einer xDSL-Verbindung, über welche ein Digital-Subscriber-Line-Zugangs-Multiplexer, DSLAM (Digital Subscriber Line Access Multiplexer), und eine Anlage in Kundenräumlichkeiten verbunden sind, umfassend die Schritte:
- Analysieren eines Stromaufwärts-Datenverkehrs in dem DSLAM und
- Ermöglichen eines xDSL-L0-Modus in dem DSLAM, wenn der Stromaufwärts-Datenverkehr vorgegebene erste Informationen aufweist, welche anzeigen, dass Stromabwärts-Daten mit hoher Datenrate erwartet werden.

2. Verfahren nach Anspruch 1, ferner umfassend den Schritt:
- Ermöglichen eines xDSL-L2-Modus in dem DSLAM, wenn der Stromaufwärts-Datenverkehr vorgegebene zweite Informationen aufweist, welche anzeigen, dass keine Stromabwärts-Daten mit hoher Datenrate erwartet werden, und/oder wenn es für eine vorgegebene Zeitperiode keine ersten Informationen gegeben hat.

3. Verfahren nach Anspruch 1 oder 2, wobei die ersten Informationen mindestens eine der folgenden Meldungen umfassen:
- eine HTTP-Anforderung;
- eine IGMP-Anforderung.

4. Verfahren nach einem der vorhergehenden Ansprüche, wobei die vorgegebenen ersten Informationen und/oder die vorgegebenen zweiten Informationen in einer Verweistabelle gespeichert sind.

5. Verfahren nach Anspruch 4, wobei der Stromaufwärtsverkehr durch Prüfen, ob die vorgegebenen ersten Informationen und/oder die vorgegebenen zweiten Informationen in der Verweistabelle zu finden sind, analysiert wird.

6. Digital-Subscriber-Line-Zugangs-Multiplexer, der über eine xDSL-Verbindung mit einer Anlage in Kundenräumlichkeiten verbindbar ist, aufweisend:
- Mittel zum Analysieren eines Stromaufwärts-Datenverkehrs;
- Mittel zum Ermöglichen eines xDSL-L0-Modus, wenn der Stromaufwärts-Datenverkehr vorgegebene erste Informationen aufweist, welche anzeigen, dass Stromabwärts-Daten mit hoher Datenrate erwartet werden.

7. Digital-Subscriber-Line-Zugangs-Multiplexer nach Anspruch 6, ferner aufweisend:
- Mittel zum Ermöglichen eines xDSL-L2-Modus, wenn der Stromaufwärts-Datenverkehr vorgegebene zweite Informationen aufweist, welche anzeigen, dass keine Stromabwärts-Daten mit hoher Datenrate erwartet werden, und/oder wenn es für eine vorgegebene Zeitperiode keine ersten Informationen gegeben hat.

8. Kommunikationssystem, aufweisend den Digital-Subscriber-Line-Zugangs-Multiplexer nach Anspruch 6 und/oder Anspruch 7.

## Revendications

1. Un procédé d'ajustement d'un mode de transmission d'une connexion xDSL par l'intermédiaire de laquelle un multiplexeur d'accès de ligne d'abonné numérique, DSLAM, et un équipement de locaux d'abonné sont raccordés comprenant les étapes suivantes :
- dans le DSLAM, l'analyse d'un trafic de données vers l'amont, et
- dans le DSLAM, l'activation d'un mode xDSL L0 si le trafic de données vers l'amont comprend une première information prédéterminée qui indique que des données vers l'aval avec un débit de données élevé sont attendues.

2. Le procédé selon la revendication 1, comprenant en outre l'étape suivante :
- dans le DSLAM, l'activation d'un mode xDSL L2 si le trafic de données vers l'amont comprend une deuxième information prédéterminée qui indique qu'aucune donnée vers l'aval avec un débit de données élevé n'est attendue et/ou s'il n'y avait aucune première information pendant une période de temps prédéterminée.

3. Le procédé selon la revendication 1 ou 2, dans lequel la première information comprend au moins un message parmi les messages suivants :
- une demande HTTP,
- une demande IGMP.

4. Le procédé selon l'une quelconque des revendications précédentes, dans lequel la première information prédéterminée et/ou la deuxième information prédéterminée est conservée en mémoire dans une table de consultation.

5. Le procédé selon la revendication 4, dans lequel le trafic vers l'amont est analysé par la vérification si la première information prédéterminée et/ou la deuxième information prédéterminée peut être trouvée dans la table de consultation.

6. Un multiplexeur d'accès de ligne d'abonné numérique pouvant être raccordé à un équipement de locaux d'abonné par l'intermédiaire d'une connexion xDSL, comprenant :
- un moyen d'analyse d'un trafic de données vers l'amont,
- un moyen d'activation d'un mode xDSL L0 si le trafic de données vers l'amont comprend une première information prédéterminée qui indique que des données vers l'aval avec un débit de données élevé sont attendues.

7. Un multiplexeur d'accès de ligne d'abonné numérique selon la revendication 6, comprenant en outre :
- un moyen d'activation d'un mode xDSL L2 si le trafic de données vers l'amont comprend une deuxième information prédéterminée qui indique qu'aucune donnée vers l'aval avec un débit de données élevé n'est attendue et/ou s'il n'y avait aucune première information pendant une période de temps prédéterminée.

8. Un système de communication comprenant le multiplexeur d'accès de ligne d'abonné numérique selon la revendication 6 et/ou 7.
